(19) Europäisches Patentamt
European Patent Office
Office européen des brevets

(11) **EP 4 506 897 A1**

(12) **EUROPEAN PATENT APPLICATION**
published in accordance with Art. 153(4) EPC

(43) Date of publication:
**12.02.2025 Bulletin 2025/07**

(21) Application number: **23784270.3**

(22) Date of filing: **04.04.2023**

(51) International Patent Classification (IPC):
**G06T 9/00** *(2006.01)*

(52) Cooperative Patent Classification (CPC):
**G06T 9/00**

(86) International application number:
**PCT/CN2023/086199**

(87) International publication number:
**WO 2023/193707 (12.10.2023 Gazette 2023/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.04.2022 CN 202210370096**
**27.06.2022 CN 202210735276**
**18.07.2022 CN 202210845200**

(71) Applicant: **VIVO MOBILE COMMUNICATION CO., LTD.**
**Dongguan, Guangdong 523863 (CN)**

(72) Inventors:
• **ZOU, Wenjie**
**Dongguan, Guangdong 523863 (CN)**
• **ZHANG, Wei**
**Dongguan, Guangdong 523863 (CN)**
• **YANG, Fuzheng**
**Dongguan, Guangdong 523863 (CN)**
• **LV, Zhuoyi**
**Dongguan, Guangdong 523863 (CN)**

(74) Representative: **Lavoix**
**Bayerstraße 83**
**80335 München (DE)**

(54) **ENCODING AND DECODING METHODS, APPARATUSES, AND DEVICES**

(57) This application discloses an encoding method, apparatus, and device, and a decoding method, apparatus, and device, and relates to the field of encoding and decoding technologies. The encoding method includes: reconstructing, by an encoder, geometry information and a connectivity of a target three-dimensional mesh based on an encoding result for the geometry information and the connectivity of the target three-dimensional mesh; and encoding, by the encoder, texture coordinates of a vertex in the target three-dimensional mesh based on reconstructed geometry information and a reconstructed connectivity.

```
                          ┌──────────┐
                          │   Start  │
                          └────┬─────┘
                               │
   ┌───────────────────────────▼──────────────────────────┐
   │ An encoder reconstructs geometry information and a    │
   │ connectivity of a target three-dimensional mesh based │──╮ 101
   │ on an encoding result for the geometry information    │
   │ and the connectivity of the target three-dimensional  │
   │ mesh                                                  │
   └───────────────────────────┬──────────────────────────┘
                               │
   ┌───────────────────────────▼──────────────────────────┐
   │ The encoder encodes texture coordinates of a vertex   │
   │ in the target three-dimensional mesh based on         │──╮ 102
   │ reconstructed geometry information and a reconstructed │
   │ connectivity                                          │
   └───────────────────────────┬──────────────────────────┘
                               │
                          ┌────▼─────┐
                          │    End   │
                          └──────────┘
```

FIG. 1

**Description**

**CROSS-REFERENCE TO RELATED APPLICATIONS**

This application claims priority to Chinese Patent Application No. 202210370096.5 filed in China on April 8, 2022, Chinese Patent Application No. 202210735276.9 filed in China on June 27, 2022, and Chinese Patent Application No. 202210845200.1 filed in China on July 18, 2022, which are incorporated herein by reference in their entireties.

**TECHNICAL FIELD**

This application pertains to the field of encoding and decoding technologies, and specifically, relates to an encoding method, apparatus, and device, and a decoding method, apparatus, and device.

**BACKGROUND**

Texture coordinates, also referred to as UV coordinates, are a type of information that describes a vertex texture of a three-dimensional mesh. Two-dimensional projection is first performed on a surface texture of the three-dimensional mesh to form a two-dimensional texture map. The UV coordinates indicate a location of the three-dimensional vertex texture in the two-dimensional texture map, and are in a one-to-one correspondence with geometry information. Therefore, the texture coordinates determine the texture map of the three-dimensional mesh, and are an important component of the three-dimensional mesh. An amount of data of the UV coordinates accounts for a large proportion in the three-dimensional mesh. However, prediction in an existing parallelogram prediction method is not sufficiently accurate. This affects texture coordinate encoding efficiency.

**SUMMARY**

Embodiments of this application provide an encoding method, apparatus, and device, and a decoding method, apparatus, and device, to resolve a problem in the conventional technology that prediction in an existing similar triangle prediction method for encoding UV coordinates is not sufficiently accurate, affecting UV coordinate encoding efficiency.

According to a first aspect, an encoding method is provided, including:

reconstructing, by an encoder, geometry information and a connectivity of a target three-dimensional mesh based on an encoding result for the geometry information and the connectivity of the target three-dimensional mesh; and encoding, by the encoder, texture coordinates of a vertex in the target three-dimensional mesh based on reconstructed geometry information and a reconstructed connectivity.

According to a second aspect, an encoding apparatus is provided, including:

a reconstruction module, configured to reconstruct geometry information and a connectivity of a target three-dimensional mesh based on an encoding result for the geometry information and the connectivity of the target three-dimensional mesh; and an encoding module, configured to encode texture coordinates of a vertex in the target three-dimensional mesh based on reconstructed geometry information and a reconstructed connectivity.

According to a third aspect, a decoding method is provided, including:

decoding, by a decoder, an obtained bitstream of a target three-dimensional mesh to obtain geometry information and a connectivity of the target three-dimensional mesh; and performing, by the decoder, decoding based on the geometry information and the connectivity to obtain texture coordinates of a vertex in the target three-dimensional mesh.

According to a fourth aspect, a decoding apparatus is provided, including:

a second obtaining module, configured to decode an obtained bitstream of a target three-dimensional mesh to obtain geometry information and a connectivity of the target three-dimensional mesh; and a decoding module, configured to perform decoding based on the geometry information and the connectivity to obtain texture coordinates of a vertex in the target three-dimensional mesh.

According to a fifth aspect, an encoding device is provided, including a processor and a memory. The memory stores a program or instructions capable of running on the processor. When the program or instructions are executed by the processor, the steps of the method according to the first aspect are implemented.

According to a sixth aspect, an encoding device is provided, including a processor and a communication interface. The processor is configured to reconstruct geometry information and a connectivity of a target three-dimensional mesh based on an encoding result for the geometry information and the connectivity of the target three-dimensional mesh, and encode texture coordinates of a vertex in the target three-dimensional mesh based on reconstructed geometry information and a reconstructed connectivity.

According to a seventh aspect, a decoding device is provided, including a processor and a memory. The memory stores a program or instructions capable of running on the processor. When the program or instructions are executed by the processor, the steps of the method according to the third aspect are implemented.

According to an eighth aspect, a decoding device is provided, including a processor and a communication interface. The processor is configured to decode an obtained bitstream of a target three-dimensional mesh to obtain geometry information and a connectivity of the target three-dimensional mesh, and perform decoding based on the geometry information and the connectivity to obtain texture coordinates of a vertex in the target three-dimensional mesh.

According to a ninth aspect, a communication system is provided, including an encoding device and a decoding device. The encoding device may be configured to perform the steps of the method according to the first aspect. The decoding device may be configured to perform the steps of the method according to the third aspect.

According to a tenth aspect, a readable storage medium is provided. The readable storage medium stores a program or instructions. When the program or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to run a program or instructions, to implement the method according to the first aspect, or implement the method according to the third aspect.

According to a twelfth aspect, a computer program or program product is provided. The computer program or program product is stored in a storage medium. The computer program or program product is executed by at least one processor to implement the steps of the method according to the first aspect, or implement the steps of the method according to the third aspect.

In the embodiments of this application, geometry information and a connectivity of a target three-dimensional mesh are reconstructed based on an encoding result for the geometry information and the connectivity of the target three-dimensional mesh, and texture coordinates of a vertex in the target three-dimensional mesh are encoded based on reconstructed geometry information and a reconstructed connectivity. In the foregoing solution, texture coordinates of a vertex are predicted based on reconstructed geometry information of the vertex, so that a prediction result is closer to a real result for the vertex. This improves prediction accuracy, and therefore improves texture coordinate encoding efficiency.

## BRIEF DESCRIPTION OF DRAWINGS

FIG. 1 is a schematic flowchart of an encoding method according to an embodiment of this application;
FIG. 2 is a geometric schematic diagram of a prediction principle;
FIG. 3 is a schematic diagram of a UV coordinate encoding framework based on a three-dimensional mesh of a video;
FIG. 4 is a schematic modular diagram of an encoding apparatus according to an embodiment of this application;
FIG. 5 is a schematic structural diagram of an encoding device according to an embodiment of this application;
FIG. 6 is a schematic flowchart of a decoding method according to an embodiment of this application;
FIG. 7 is a schematic diagram of a UV coordinate decoding framework based on a three-dimensional mesh of a video;
FIG. 8 is a schematic modular diagram of a decoding apparatus according to an embodiment of this application; and
FIG. 9 is a schematic structural diagram of a communication device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, but these technologies may also be applied to applications other than an NR system application, for example, a $6^{th}$ generation ($6^{th}$ Generation, 6G) communication system.

The following describes in detail an encoding method, apparatus, and device and a decoding method, apparatus, and device provided in the embodiments of this application with reference to the accompanying drawings and by using some embodiments and application scenarios thereof.

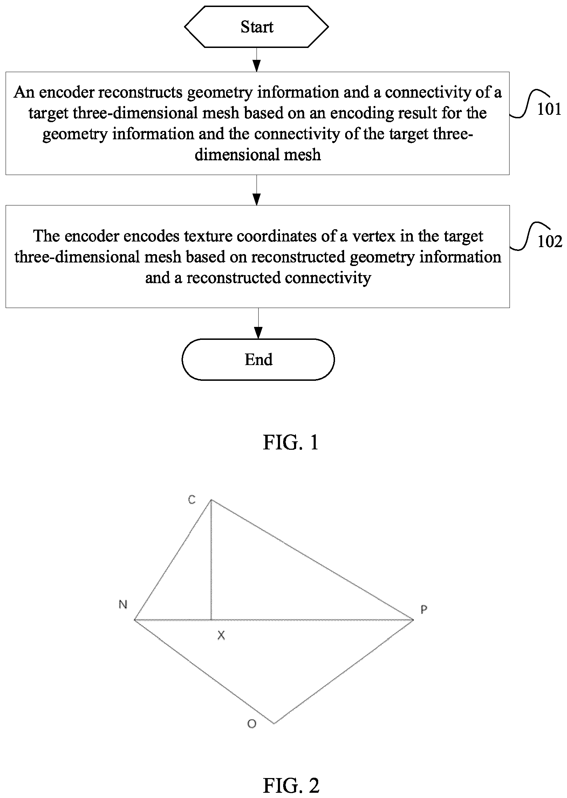

As shown in FIG. 1, an embodiment of this application provides an encoding method, including the following steps.

Step 101: An encoder reconstructs geometry information and a connectivity of a target three-dimensional mesh based on an encoding result for the geometry information and the connectivity of the target three-dimensional mesh.

It should be noted that the target three-dimensional mesh in this application may be understood as a three-dimensional mesh corresponding to any video frame, the geometry information of the target three-dimensional mesh may be understood as coordinates of a vertex in the three-dimensional mesh, the coordinates are usually three-dimensional coordinates, and the connectivity is used to describe a connectivity between elements, such as vertices and faces, in the three-dimensional mesh, and may also be referred to as a connectivity relationship.

It should be noted that texture coordinates of a vertex are encoded based on geometry information and a connectivity in this embodiment of this application, and to ensure that encoded texture coordinates are consistent with encoded geometry information and an encoded connectivity, geometry information and a connectivity are reconstructed after encoding in this embodiment of this application.

Step 102: The encoder encodes texture coordinates of a vertex in the target three-dimensional mesh based on reconstructed geometry information and a reconstructed connectivity.

It should be noted that, in this embodiment of this application, texture coordinates of a vertex are predicted based on reconstructed geometry information of the vertex, so that a prediction result is closer to a real result for the vertex. This can improve accuracy of predicting a vertex, and therefore can ensure accuracy of encoding texture coordinates.

Optionally, a specific implementation process of step 102 includes the following steps.

Step 1021: The encoder determines a target triangle based on the reconstructed connectivity, where the target triangle includes a first edge and a to-be-encoded vertex.

Optionally, in this embodiment of this application, an optional implementation of this step is as follows:

The encoder selects the first edge from an edge set, where the edge set is a set including edges of a triangle constructed based on the reconstructed connectivity; and the encoder determines the target triangle based on the first edge.

Optionally, before the encoder selects the first edge from the edge set, the method further includes:

The encoder selects an initial triangle based on the reconstructed connectivity; and the encoder encodes texture coordinates of three vertices of the initial triangle, and adds three edges of the initial triangle to the edge set.

Usually, the initial triangle is the $1^{st}$ triangle in the connectivity. For the initial triangle, in this embodiment of this application, texture coordinates are directly encoded without predicting vertices. Further, a specific implementation of encoding, by the encoder, the texture coordinates of the three vertices of the initial triangle includes: The encoder directly encodes texture coordinates of the $1^{st}$ vertex of the initial triangle; the encoder predicts an edge by using the texture coordinates of the $1^{st}$ vertex to obtain texture coordinates of the $2^{nd}$ vertex of the initial triangle, and obtains texture coordinates of the $3^{rd}$ vertex of the initial triangle through similar-triangles-based predictive coding; and the encoder encodes the texture coordinates of the $2^{nd}$ vertex and the $3^{rd}$ vertex of the initial triangle.

After texture coordinates (it should be noted that the texture coordinates are original texture coordinates directly obtained based on the target three-dimensional mesh) of all vertices of the initial triangle are encoded, all edges of the initial triangle are added to the edge set to form an initial edge set, and then subsequent vertices are predicted based on the initial edge set.

Step 1022: The encoder predicts texture coordinates of the to-be-encoded vertex based on reconstructed geometry information corresponding to three vertices of the target triangle and real texture coordinates of a vertex on the first edge, to obtain predicted texture coordinates of the to-be-encoded vertex.

Step 1023: The encoder encodes the texture coordinates of the to-be-encoded vertex based on a residual between real texture coordinates of the to-be-encoded vertex and the predicted texture coordinates.

It should be noted that, after the predicted texture coordinates of the to-be-encoded vertex are obtained, the residual between the predicted texture coordinates and the real texture coordinates may be obtained, and then encoding is performed based on the residual. Optionally, the residual may be directly encoded; or the residual may be first processed, and then a processed residual is encoded. For example, the processing may be normalization. The to-be-encoded vertex is encoded through encoding based on the residual, so that the number of bits in texture coordinate encoding can be reduced.

It should be noted that the residual in this embodiment of this application may be obtained in a manner of subtracting the predicted texture coordinates from the real texture coordinates, or may be obtained in a manner of subtracting the real texture coordinates from the predicted texture coordinates. Either manner can be specifically used, provided that the encoder and a decoder have consistent understanding. The residual in this embodiment of this application may also be referred to as a residual.

Optionally, in an embodiment of this application, an implementation of predicting the texture coordinates of the to-be-encoded vertex based on the reconstructed geometry information corresponding to the three vertices of the target triangle and the real texture coordinates of the vertex on the first edge, to obtain the predicted texture coordinates of the to-be-encoded vertex includes the following steps.

Step S11: The encoder obtains texture coordinates of a predicted projected point of the to-be-encoded vertex on the first edge based on reconstructed geometry information corresponding to each vertex of the target triangle and the real texture coordinates of the vertex on the first edge.

It should be noted that, as shown in FIG. 2, an edge NP is an edge selected from the edge set, and may be considered as the first edge, a vertex N and a vertex P are two vertices of the first edge, a vertex C is the to-be-encoded vertex, the vertex N, the vertex P, and the vertex C form the target triangle, a point X is a projection of the vertex C on the edge NP, a vertex O is an encoded vertex, and a triangle formed by the vertex O, the vertex N, and the vertex P shares the edge NP with a triangle formed by the vertex N, the vertex P, and the vertex C. Based on FIG. 2, optionally, a specific manner of obtaining the texture coordinates of the predicted projected point of the to-be-encoded vertex on the first edge in this embodiment of this application is as follows:

The encoder obtains the texture coordinates of the predicted projected point of the to-be-encoded vertex on the first edge based on a sum of $\overrightarrow{AX}_{uv}$ and $A_{uv}$, or obtains the texture coordinates of the predicted projected point of the to-be-encoded vertex on the first edge based on a residual between $A_{uv}$ and $\overrightarrow{XA}_{uv}$, where

A is a vertex N on the first edge of the target triangle, $\overrightarrow{AX}_{uv}$ is a vector from the vertex N on the first edge of the target triangle to texture coordinates of a predicted projected point X of the to-be-encoded vertex C on the first edge, $A_{uv}$ is real texture coordinates of the vertex N on the first edge of the target triangle, and $\overrightarrow{XA}_{uv}$ is a vector from the predicted projected point X of the to-be-encoded vertex C on the first edge to texture coordinates of the vertex N on the first edge of the target triangle; or A is a vertex P on the first edge of the target triangle, $\overrightarrow{AX}_{uv}$ is a vector from the vertex P on the first edge of the target triangle to texture coordinates of a predicted projected point X of the to-be-encoded vertex C on the first edge, $A_{uv}$ is real texture coordinates of the vertex P on the first edge of the target triangle, and $\overrightarrow{XA}_{uv}$ is a vector from the predicted projected point X of the to-be-encoded vertex C on the first edge to texture coordinates of the vertex P on the first edge of the target triangle.

For example, the texture coordinates of the predicted projected point of the to-be-encoded vertex on the first edge are obtained based on a formula 1: $X_{uv} = \overrightarrow{NX}_{uv} + N_{uv}$; or

the texture coordinates of the predicted projected point of the to-be-encoded vertex on the first edge are obtained based on a formula 2: $X_{uv} = N_{uv} - \overrightarrow{XN}_{uv}$; or
the texture coordinates of the predicted projected point of the to-be-encoded vertex on the first edge are obtained based on a formula 3: $X_{uv} = \overrightarrow{PX}_{uv} + P_{uv}$; or
the texture coordinates of the predicted projected point of the to-be-encoded vertex on the first edge are obtained based on a formula 4: $X_{uv} = P_{uv} - \overrightarrow{XP}_{uv}$, where
$X_{uv}$ is predicted texture coordinates of a predicted projected point X of the to-be-encoded vertex C on the first edge, $\overrightarrow{NX}_{uv}$ is a vector from the vertex N on the first edge of the target triangle to texture coordinates of the predicted projected point X of the to-be-encoded vertex C on the first edge, $N_{uv}$ is real texture coordinates of the vertex N on the first edge of the target triangle, $\overrightarrow{XN}_{uv}$ is a vector from the predicted projected point X of the to-be-encoded vertex C on the first edge to texture coordinates of the vertex N on the first edge of the target triangle, $\overrightarrow{PX}_{uv}$ is a vector from the vertex P on the first edge of the target triangle to the texture coordinates of the predicted projected point X of the to-be-encoded vertex C on the first edge, $P_{uv}$ is real texture coordinates of the vertex P on the first edge of the target triangle, and $\overrightarrow{XP}_{uv}$ is a vector

from the predicted projected point X of the to-be-encoded vertex C on the first edge to texture coordinates of the vertex P on the first edge of the target triangle.

Further, $\overrightarrow{NX}_{uv}=(\overrightarrow{NP}_G \times \overrightarrow{NC}_G)\times\overrightarrow{NP}_{UV}/\overrightarrow{NP}_G^2$, where $\overrightarrow{NP}_G$ is a vector between the vertex N on the first edge and reconstructed geometry information corresponding to the vertex P, $\overrightarrow{NC}_G$ is a vector from the vertex N on the first edge to reconstructed geometry information corresponding to the to-be-encoded vertex C, and $\overrightarrow{NP}_{UV}$ is a vector from the vertex N on the first edge to the texture coordinates of the vertex P;

$\overrightarrow{PX}_{uv}=(\overrightarrow{PN}_G \times \overrightarrow{PC}_G)\times\overrightarrow{PN}_{UV}/\overrightarrow{PN}_G^2$, where $\overrightarrow{PN}_G$ is a vector between the vertex P on the first edge and reconstructed geometry information corresponding to the vertex N, $\overrightarrow{PC}_G$ is a vector from the vertex P on the first edge to reconstructed geometry information corresponding to the to-be-encoded vertex C, and $\overrightarrow{PN}_{UV}$ is a vector from the vertex P on the first edge to the texture coordinates of the vertex N;

$XN_{uv} = (|\overrightarrow{PC}_G|/|\overrightarrow{PN}_G|)\cdot Rotated(\overrightarrow{PN}_{uv})$, where $\overrightarrow{PC}_G$ is a vector between the vertex P on the first edge and reconstructed geometry information corresponding to the to-be-encoded vertex C, $\overrightarrow{PN}_G$ is a vector from the vertex P on the first edge to reconstructed geometry information corresponding to the vertex N, and $Rotated(\overrightarrow{PN}_{uv})$ indicates a 90-degree rotation of $\overrightarrow{PN}_{uv}$; and

$$\overrightarrow{\mathbf{XP}}_{uv} = \overrightarrow{-PX}_{uv}.$$

Step S12: The encoder obtains a determining result indicating whether a first triangle including the first edge and a first vertex corresponding to the first edge is a degenerate triangle, where the first vertex is an opposite vertex of the first edge of the first triangle, and the first triangle and the target triangle have a common first edge.

It should be noted that, in some cases, an area of the selected first triangle may be zero, and the encoder performs different processing for different triangles. Therefore, in this step, the area of the first triangle needs to be first determined. In a case that the area of the first triangle is zero, the first triangle may be considered as a degenerate triangle; otherwise, the first triangle is not a degenerate triangle.

Step S13: The encoder obtains the predicted texture coordinates of the to-be-encoded vertex based on the determining result and the texture coordinates of the predicted projected point.

Optionally, an implementation of step S13 is as follows:

In a case that the determining result indicates that the first triangle is a degenerate triangle, the encoder obtains the predicted texture coordinates of the to-be-encoded vertex based on $X_{uv}$, $\overrightarrow{XC}_{uv}$, and a magnitude relationship between $|\overrightarrow{C_1C}_{uv}|$ and $|\overrightarrow{C_2C}_{uv}|$, where

$X_{uv}$ is predicted texture coordinates of a predicted projected point X of the to-be-encoded vertex C on the first edge, $\overrightarrow{XC}_{uv}$ is a predicted vector from the predicted projected point X of the to-be-encoded vertex C on the first edge to texture coordinates of the to-be-encoded vertex C, $\overrightarrow{C_1C}_{uv}$ is a vector between a predicted point $\mathbf{C_1}$ and the texture coordinates of the to-be-encoded vertex C, and $\overrightarrow{C_2C}_{uv}$ is a vector between a predicted point $\mathbf{C_2}$ and the texture coordinates of the to-be-encoded vertex C.

To be specific, in a case that the determining result indicates that the first triangle is a degenerate triangle, an implementation of obtaining, by the encoder, the predicted texture coordinates of the to-be-encoded vertex based on the determining result and the texture coordinates of the predicted projected point includes:

obtaining the predicted texture coordinates of the to-be-encoded vertex based on a formula 5:

$$Pred_C = \begin{cases} X_{uv} + \overrightarrow{XC}_{uv}, |\overrightarrow{C_1C}_{uv}| < |\overrightarrow{C_2C}_{uv}| \\ X_{uv} - \overrightarrow{XC}_{uv}, |\overrightarrow{C_1C}_{uv}| > |\overrightarrow{C_2C}_{uv}| \end{cases}$$

, where

$Pred_C$ is the predicted texture coordinates of the to-be-encoded vertex C, $\overrightarrow{C_1C}_{uv} = C_{uv} - (X_{uv} + \overrightarrow{XC}_{uv})$, $C_{uv}$ is the texture coordinates of the to-be-encoded vertex C, $\overrightarrow{C_2C}_{uv} = C_{uv} - (X_{uv} - \overrightarrow{XC}_{uv})$, $\overrightarrow{XC}_{uv}$ is a vector from the predicted projected point X of the to-be-encoded vertex C on the first edge to the texture coordinates of the to-be-encoded vertex C, $\overrightarrow{XC}_{uv}= (|\overrightarrow{XC}_G|/|\overrightarrow{NP}_G|)\cdot Rotated(\overrightarrow{NP}_{uv})$, $\overrightarrow{XC}_G$ is a vector from the projected point X of the to-be-encoded vertex C on the first edge to reconstructed geometry information corresponding to the to-be-encoded vertex C, and $Rotated(\overrightarrow{NP}_{uv})$ indicates a 90-degree rotation of $\overrightarrow{NP}_{uv}$.

It should be further noted that, in this case, the encoder obtains a target identifier, where the target identifier is used to identify the magnitude relationship between $|\overrightarrow{C_1C}_{uv}|$ and $|\overrightarrow{C_1C}_{uv}|$; and the encoder performs entropy encoding on the target identifier. The decoder can accurately decode the predicted texture coordinates based on the target identifier.

Optionally, another implementation of step S13 is as follows:

In a case that the determining result indicates that the first triangle is not a degenerate triangle, the encoder obtains the predicted texture coordinates of the to-be-encoded vertex based on $X_{uv}$, $\overrightarrow{XC}_{uv}$, and a magnitude relationship between $|\overrightarrow{C_1O}_{uv}|$ and $|\overrightarrow{C_2O}_{uv}|$, where $X_{uv}$ is predicted texture coordinates of a predicted projected point X of the to-be-encoded vertex C on the first edge, $\overrightarrow{XC}_{uv}$ is a predicted vector from the predicted projected point X of the to-be-encoded vertex C on the first edge to texture coordinates of the to-be-encoded vertex C, $\overrightarrow{C_1O}_{uv}$ is a vector between a predicted point $C_1$ and texture coordinates of a first vertex O corresponding to the first edge, and $\overrightarrow{C_2O}_{uv}$ is a vector between a predicted point $C_2$ and the texture coordinates of the first vertex O corresponding to the first edge.

To be specific, in a case that the determining result indicates that the first triangle is not a degenerate triangle, an implementation of obtaining, by the encoder, the predicted texture coordinates of the to-be-encoded vertex based on the determining result and the texture coordinates of the predicted projected point includes:

obtaining the predicted texture coordinates of the to-be-encoded vertex based on a formula 6:

$$Pred_C = \begin{cases} X_{uv} + \overrightarrow{XC}_{uv}, & |\overrightarrow{C_1O}_{uv}| > |\overrightarrow{C_2O}_{uv}| \\ X_{uv} - \overrightarrow{XC}_{uv}, & |\overrightarrow{C_1O}_{uv}| < |\overrightarrow{C_2O}_{uv}| \end{cases}$$

, where $Pred_C$ is the predicted texture coordinates of the to-be-encoded vertex C, $\overrightarrow{C_1O}_{uv} = O_{uv} - (X_{uv} + \overrightarrow{XC}_{uv})$, $O_{uv}$ is the texture coordinates of the first vertex O corresponding to the first edge of the target triangle, and $\overrightarrow{C_2O}_{uv} = O_{uv} - (X_{uv} - \overrightarrow{XC}_{uv})$.

It should be noted that the predicted texture coordinates of the to-be-encoded vertex are obtained based on the foregoing process, and the to-be-encoded vertex may be encoded based on the predicted texture coordinates. Optionally, after encoding the to-be-encoded vertex based on the first edge in the edge set, the encoder adds a second edge of the target triangle to the edge set and deletes the first edge from the edge set, where the second edge is an edge of the target triangle that is not included in the edge set. In this way, the edge set is updated.

It should be noted that, in this embodiment of this application, residuals of the to-be-encoded vertex may be encoded when being obtained; or all residuals may be first obtained, and then the residuals are uniformly encoded.

To sum up, a specific implementation process of encoding texture coordinates (hereinafter referred to as UV coordinates) in this embodiment of this application is as follows:

Step S1: Select an initial triangle from the reconstructed connectivity, directly encode UV coordinates of three vertices of the initial triangle without prediction, and then add edges of the initial triangle to an edge set.

Step S2: Select an edge $\tau$ from the edge set according to an access criterion, encode UV coordinates of an opposite vertex of a new triangle including the edge $\tau$, calculate predicted UV coordinates of a to-be-encoded vertex in the foregoing manner by using a three-dimension-to-two-dimension projection relationship of a triangle, obtain a target identifier for a special degenerate triangle, and subtract the predicted UV coordinates from original values of UV coordinates (namely, real UV coordinates, to be specific, UV coordinates directly obtained based on the target three-dimensional mesh) of the to-be-encoded vertex to obtain a residual.

Step S3: Add two edges of the new triangle to the edge set, remove the edge $\tau$ at the top of the edge set, then obtain a next edge from the edge set, continue to encode predicted UV coordinates of an opposite vertex of a triangle adjacent to the edge, obtain a residual, return to step S3, and cyclically perform step S3 until residuals of all vertices are obtained.

Step S4: Perform entropy encoding on residuals of UV coordinates and the target identifier, and output a UV coordinate bitstream.

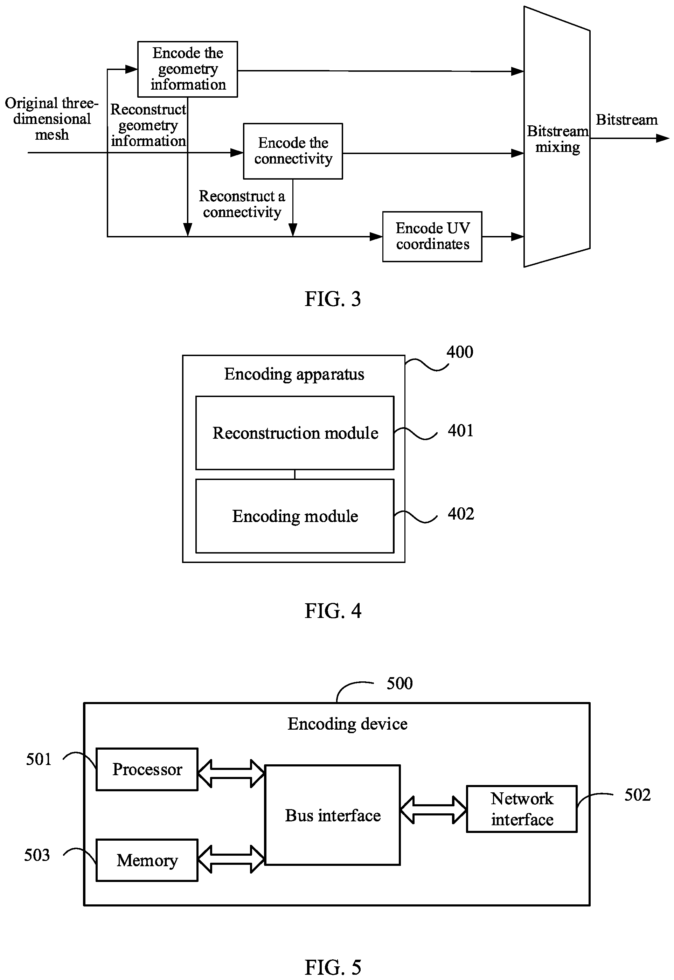

A UV coordinate encoding framework based on a three-dimensional mesh of a video in this embodiment of this application is shown in FIG. 3. An overall encoding process is as follows:

In a case that geometry information and a connectivity of a three-dimensional mesh are encoded, UV coordinates may be encoded by using reconstructed geometry information and a reconstructed connectivity. First, a triangle is selected as an initial triangle, and coordinate values are directly encoded. UV coordinate values of an uncoded vertex of a triangle adjacent to a selected initial edge are predicted based on encoded UV coordinates of the initial triangle and a texture projection relationship. A residual between real UV coordinates of a to-be-encoded vertex and predicted coordinate values is encoded, and a new edge is selected from a newly encoded triangle to encode an uncoded vertex of an adjacent triangle. This process is continuously iterated to complete encoding of UV coordinates of the entire three-dimensional mesh.

It should be noted that this embodiment of this application provides a new manner of predicting UV coordinates of a vertex. Texture coordinates of a vertex are predicted based on three-dimensional and two-dimensional information of the vertex, so that a prediction result is closer to a real result for the vertex. This can improve prediction accuracy, and therefore improve texture coordinate encoding efficiency.

The encoding method provided in the embodiments of this application may be performed by an encoding apparatus. In the embodiments of this application, an encoding apparatus provided in the embodiments of this application is described by using an example in which the encoding apparatus performs the encoding method.

As shown in FIG. 4, an embodiment of this application provides an encoding apparatus 400, including:

a reconstruction module 401, configured to reconstruct geometry information and a connectivity of a target three-dimensional mesh based on an encoding result for the geometry information and the connectivity of the target three-dimensional mesh; and

an encoding module 402, configured to encode texture coordinates of a vertex in the target three-dimensional mesh based on reconstructed geometry information and a reconstructed connectivity.

Optionally, the encoding module 402 includes:

a first determining unit, configured to determine a target triangle based on the reconstructed connectivity, where the target triangle includes a first edge and a to-be-encoded vertex;

a first obtaining unit, configured to predict texture coordinates of the to-be-encoded vertex based on reconstructed geometry information corresponding to three vertices of the target triangle and real texture coordinates of a vertex on the first edge, to obtain predicted texture coordinates of the to-be-encoded vertex; and

an encoding unit, configured to encode the texture coordinates of the to-be-encoded vertex based on a residual between real texture coordinates of the to-be-encoded vertex and the predicted texture coordinates.

Optionally, the first obtaining unit is configured to:

obtain texture coordinates of a predicted projected point of the to-be-encoded vertex on the first edge based on reconstructed geometry information corresponding to each vertex of the target triangle and the real texture coordinates of the vertex on the first edge;

obtain a determining result indicating whether a first triangle including the first edge and a first vertex corresponding to the first edge is a degenerate triangle, where the first vertex is an opposite vertex of the first edge of the first triangle, and the first triangle and the target triangle have a common first edge; and

obtain the predicted texture coordinates of the to-be-encoded vertex based on the determining result and the texture coordinates of the predicted projected point.

Optionally, the obtaining texture coordinates of a predicted projected point of the to-be-encoded vertex on the first edge based on reconstructed geometry information corresponding to each vertex of the target triangle and the real texture coordinates of the vertex on the first edge includes:

obtaining the texture coordinates of the predicted projected point of the to-be-encoded vertex on the first edge based on a sum of $\overrightarrow{AX}_{uv}$ and $A_{uv}$, or obtaining the texture coordinates of the predicted projected point of the to-be-encoded vertex on the first edge based on a residual between $A_{uv}$ and $\overrightarrow{XA}_{uv}$, where

A is a vertex N on the first edge of the target triangle, $\overrightarrow{AX}_{uv}$ is a vector from the vertex N on the first edge of the target triangle to texture coordinates of a predicted projected point X of the to-be-encoded vertex C on the first edge, $A_{uv}$ is real texture coordinates of the vertex N on the first edge of the target triangle, and $\overrightarrow{XA}_{uv}$ is a vector from the predicted projected point X of the to-be-encoded vertex C on the first edge to texture coordinates of the vertex N on the first edge of the target triangle; or A is a vertex P on the first edge of the target triangle, $\overrightarrow{AX}_{uv}$ is a vector from the vertex P on the first edge of the target triangle to texture coordinates of a predicted projected point X of the to-be-encoded vertex C on the first edge, $A_{uv}$ is real texture coordinates of the vertex P on the first edge of the target triangle, and $\overrightarrow{XA}_{uv}$ is a vector from the predicted projected point X of the to-be-encoded vertex C on the first edge to texture coordinates of the vertex P on the first edge of the target triangle.

Optionally, an implementation of obtaining the predicted texture coordinates of the to-be-encoded vertex based on the determining result and the texture coordinates of the predicted projected point includes:

in a case that the determining result indicates that the first triangle is a degenerate triangle, obtaining the predicted texture coordinates of the to-be-encoded vertex based on $X_{uv}$, $\overrightarrow{XC}_{uv}$, and a magnitude relationship between $|\overrightarrow{C_1C}_{uv}|$ and $|\overrightarrow{C_2C}_{uv}|$, where

$X_{uv}$ is predicted texture coordinates of a predicted projected point X of the to-be-encoded vertex C on the first edge,
$\overrightarrow{XC}_{uv}$ is a predicted vector from the predicted projected point X of the to-be-encoded vertex C on the first edge to texture coordinates of the to-be-encoded vertex C, $\overrightarrow{C_1C}_{uv}$ is a vector between a predicted point $C_1$ and the texture coordinates of the to-be-encoded vertex C, and $\overrightarrow{C_2C}_{uv}$ is a vector between a predicted point $C_2$ and the texture coordinates of the to-be-encoded vertex C.

Optionally, the apparatus further includes:

a first obtaining module, configured to obtain a target identifier, where the target identifier is used to identify the magnitude relationship between $|\overrightarrow{C_1C}_{uv}|$ and $|\overrightarrow{C_2C}_{uv}|$; and
an entropy encoding module, configured to perform entropy encoding on the target identifier.

Optionally, an implementation of obtaining the predicted texture coordinates of the to-be-encoded vertex based on the determining result and the texture coordinates of the predicted projected point includes:

in a case that the determining result indicates that the first triangle is not a degenerate triangle, obtaining the predicted texture coordinates of the to-be-encoded vertex based on $X_{uv}$, $\overrightarrow{XC}_{uv}$, and a magnitude relationship between $|\overrightarrow{C_1O}_{uv}|$ and $|\overrightarrow{C_2O}_{uv}|$, where
$X_{uv}$ is predicted texture coordinates of a predicted projected point X of the to-be-encoded vertex C on the first edge, $\overrightarrow{XC}_{uv}$ is a predicted vector from the predicted projected point X of the to-be-encoded vertex C on the first edge to texture coordinates of the to-be-encoded vertex C, $\overrightarrow{C_1O}_{uv}$ is a vector between a predicted point $C_1$ and texture coordinates of a first vertex O corresponding to the first edge, and $\overrightarrow{C_2O}_{uv}$ is a vector between a predicted point $C_2$ and the texture coordinates of the first vertex O corresponding to the first edge.

Optionally, the first determining unit is configured to:

select the first edge from an edge set, where the edge set is a set including edges of a triangle constructed based on the reconstructed connectivity; and
determine the target triangle based on the first edge.

Optionally, before the first determining unit selects the first edge from the edge set, the encoding module further includes:

a first selection unit, configured to select an initial triangle based on the reconstructed connectivity; and
a first processing unit, configured to encode texture coordinates of three vertices of the initial triangle, and add three edges of the initial triangle to the edge set.

Optionally, the first processing unit is configured to:

directly encode texture coordinates of the 1st vertex of the initial triangle;
predict an edge by using the texture coordinates of the 1st vertex to obtain texture coordinates of the 2nd vertex of the initial triangle, and obtain texture coordinates of the 3rd vertex of the initial triangle through similar-triangles-based predictive coding; and
encode the texture coordinates of the 2nd vertex and the 3rd vertex of the initial triangle.

Optionally, after the encoding unit encodes the texture coordinates of the to-be-encoded vertex based on the residual between the real texture coordinates of the to-be-encoded vertex and the predicted texture coordinates, the encoding module 402 further includes:
a second processing unit, configured to add a second edge of the target triangle to the edge set, and delete the first edge from the edge set, where the second edge is an edge of the target triangle that is not included in the edge set.
The apparatus embodiment corresponds to the foregoing encoding method embodiment, and all implementation processes and implementations of the foregoing method embodiment are applicable to the apparatus embodiment, with the same technical effect achieved.
An embodiment of this application further provides an encoding device, including a processor and a communication interface. The processor is configured to:
reconstruct geometry information and a connectivity of a target three-dimensional mesh based on an encoding result for the geometry information and the connectivity of the target three-dimensional mesh, and encode texture coordinates of a vertex in the target three-dimensional mesh based on reconstructed geometry information and a reconstructed connectivity.
Optionally, the processor is configured to:

determine a target triangle based on the reconstructed connectivity, where the target triangle includes a first edge and a to-be-encoded vertex;

predict texture coordinates of the to-be-encoded vertex based on reconstructed geometry information corresponding to three vertices of the target triangle and real texture coordinates of a vertex on the first edge, to obtain predicted texture coordinates of the to-be-encoded vertex; and

encode the texture coordinates of the to-be-encoded vertex based on a residual between real texture coordinates of the to-be-encoded vertex and the predicted texture coordinates.

Optionally, the processor is configured to:

obtain texture coordinates of a predicted projected point of the to-be-encoded vertex on the first edge based on reconstructed geometry information corresponding to each vertex of the target triangle and the real texture coordinates of the vertex on the first edge;

obtain a determining result indicating whether a first triangle including the first edge and a first vertex corresponding to the first edge is a degenerate triangle, where the first vertex is an opposite vertex of the first edge of the first triangle, and the first triangle and the target triangle have a common first edge; and

obtain the predicted texture coordinates of the to-be-encoded vertex based on the determining result and the texture coordinates of the predicted projected point.

Optionally, the processor is configured to:

obtain the texture coordinates of the predicted projected point of the to-be-encoded vertex on the first edge based on a sum of $\overrightarrow{AX}_{uv}$ and $A_{uv}$, or obtain the texture coordinates of the predicted projected point of the to-be-encoded vertex on the first edge based on a residual between $A_{uv}$ and $\overrightarrow{XA}_{uv}$, where

A is a vertex N on the first edge of the target triangle, $\overrightarrow{AX}_{uv}$ is a vector from the vertex N on the first edge of the target triangle to texture coordinates of a predicted projected point X of the to-be-encoded vertex C on the first edge, $A_{uv}$ is real texture coordinates of the vertex N on the first edge of the target triangle, and $\overrightarrow{XA}_{uv}$ is a vector from the predicted projected point X of the to-be-encoded vertex C on the first edge to texture coordinates of the vertex N on the first edge of the target triangle; or A is a vertex P on the first edge of the target triangle, $\overrightarrow{AX}_{uv}$ is a vector from the vertex P on the first edge of the target triangle to texture coordinates of a predicted projected point X of the to-be-encoded vertex C on the first edge, $A_{uv}$ is real texture coordinates of the vertex P on the first edge of the target triangle, and $\overrightarrow{XA}_{uv}$ is a vector from the predicted projected point X of the to-be-encoded vertex C on the first edge to texture coordinates of the vertex P on the first edge of the target triangle.

Optionally, the processor is configured to:

in a case that the determining result indicates that the first triangle is a degenerate triangle, obtain the predicted texture coordinates of the to-be-encoded vertex based on $X_{uv}$, $\overrightarrow{XC}_{uv}$, and a magnitude relationship between $|\overrightarrow{C_1C}_{uv}|$ and $|\overrightarrow{C_2C}_{uv}|$, where

$X_{uv}$ is predicted texture coordinates of a predicted projected point X of the to-be-encoded vertex C on the first edge, $\overrightarrow{XC}_{uv}$ is a predicted vector from the predicted projected point X of the to-be-encoded vertex C on the first edge to texture coordinates of the to-be-encoded vertex C, $\overrightarrow{C_1C}_{uv}$ is a vector between a predicted point $C_1$ and the texture coordinates of the to-be-encoded vertex C, and $\overrightarrow{C_2C}_{uv}$ is a vector between a predicted point $C_2$ and the texture coordinates of the to-be-encoded vertex C.

Optionally, the processor is further configured to:

obtain a target identifier, where the target identifier is used to identify the magnitude relationship between $|\overrightarrow{C_1C}_{uv}|$ and $|\overrightarrow{C_2C}_{uv}|$; and

perform entropy encoding on the target identifier.

Optionally, the processor is configured to:

in a case that the determining result indicates that the first triangle is not a degenerate triangle, obtain the predicted texture coordinates of the to-be-encoded vertex based on $X_{uv}$, $\overrightarrow{XC}_{uv}$, and a magnitude relationship between $|\overrightarrow{C_1O}_{uv}|$ and $|\overrightarrow{C_2O}_{uv}|$, where

$X_{uv}$ is predicted texture coordinates of a predicted projected point X of the to-be-encoded vertex C on the first edge,

$\overrightarrow{XC}_{uv}$ is a predicted vector from the predicted projected point X of the to-be-encoded vertex C on the first edge to texture coordinates of the to-be-encoded vertex C, $\overrightarrow{C_1O}_{uv}$ is a vector between a predicted point $C_1$ and texture coordinates of a first vertex O corresponding to the first edge, and $\overrightarrow{C_2O}_{uv}$ is a vector between a predicted point $C_2$ and the texture coordinates of the first vertex O corresponding to the first edge.

Optionally, the processor is further configured to:

select the first edge from an edge set, where the edge set is a set including edges of a triangle constructed based on the reconstructed connectivity; and
determine the target triangle based on the first edge.

Optionally, the processor is further configured to:

select an initial triangle based on the reconstructed connectivity; and
encode texture coordinates of three vertices of the initial triangle, and add three edges of the initial triangle to the edge set.

Optionally, the processor is configured to:

directly encode texture coordinates of the 1st vertex of the initial triangle;
predict an edge by using the texture coordinates of the 1st vertex to obtain texture coordinates of the 2nd vertex of the initial triangle, and obtain texture coordinates of the 3rd vertex of the initial triangle through similar-triangles-based predictive coding; and
encode the texture coordinates of the 2nd vertex and the 3rd vertex of the initial triangle.

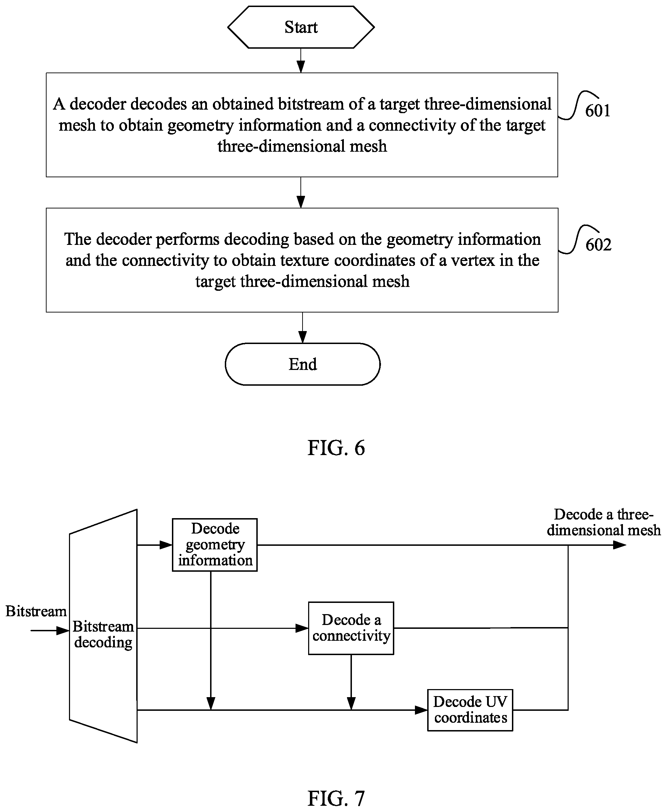

Optionally, the processor is further configured to:
add a second edge of the target triangle to the edge set, and delete the first edge from the edge set, where the second edge is an edge of the target triangle that is not included in the edge set.
Specifically, an embodiment of this application further provides an encoding device. As shown in FIG. 5, the encoding device 500 includes a processor 501, a network interface 502, and a memory 503. The network interface 502 is, for example, a common public radio interface (Common Public Radio Interface, CPRI).
Specifically, the encoding device 500 in this embodiment of this application further includes instructions or a program stored in the memory 503 and capable of running on the processor 501, and the processor 501 invokes the instructions or program in the memory 503 to perform the method performed by the modules shown in FIG. 4, with the same technical effect achieved. To avoid repetition, details are not described herein again.
As shown in FIG. 6, an embodiment of this application further provides a decoding method, including the following steps.
Step 601: A decoder decodes an obtained bitstream of a target three-dimensional mesh to obtain geometry information and a connectivity of the target three-dimensional mesh.
Step 602: The decoder performs decoding based on the geometry information and the connectivity to obtain texture coordinates of a vertex in the target three-dimensional mesh.
Optionally, that the decoder performs decoding based on the geometry information and the connectivity to obtain texture coordinates of a vertex in the target three-dimensional mesh includes:

The decoder determines a target triangle based on the connectivity, where the target triangle includes a first edge and a to-be-decoded vertex;
the decoder predicts texture coordinates of the to-be-decoded vertex based on geometry information corresponding to three vertices of the target triangle and real texture coordinates of a vertex on the first edge, to obtain predicted texture coordinates of the to-be-decoded vertex; and
the decoder performs decoding based on the predicted texture coordinates of the to-be-decoded vertex and a residual obtained by decoding the to-be-decoded vertex, to obtain real texture coordinates of the to-be-decoded vertex.

It should be noted that a residual (namely, a residual) of each vertex can be obtained by decoding a UV coordinate bitstream, and real UV coordinates can be obtained by using a residual obtaining manner corresponding to that used by an encoder. For example, if the encoder obtains the residual in a manner of subtracting predicted UV coordinates from the real UV coordinates, the decoder obtains the real UV coordinates of the vertex by adding the residual to the predicted UV coordinates of the vertex; or if the encoder obtains the residual in a manner of subtracting the real UV coordinates from the predicted UV coordinates, the decoder obtains the real UV coordinates of the vertex by subtracting the residual from the predicted UV coordinates of the vertex.

Optionally, the obtaining predicted texture coordinates of the to-be-decoded vertex include:

The decoder obtains texture coordinates of a predicted projected point of the to-be-decoded vertex on the first edge based on geometry information corresponding to each vertex of the target triangle and the real texture coordinates of the vertex on the first edge;

the decoder obtains a determining result indicating whether a first triangle including the first edge and a first vertex corresponding to the first edge is a degenerate triangle, where the first vertex is an opposite vertex of the first edge of the first triangle, and the first triangle and the target triangle have a common first edge; and

the decoder obtains the predicted texture coordinates of the to-be-decoded vertex based on the determining result and the texture coordinates of the predicted projected point.

Optionally, that the decoder obtains texture coordinates of a predicted projected point of the to-be-decoded vertex on the first edge based on geometry information corresponding to each vertex of the target triangle and the real texture coordinates of the vertex on the first edge includes:

The decoder obtains the texture coordinates of the predicted projected point of the to-be-decoded vertex on the first edge based on a sum of $\overrightarrow{AX}_{uv}$ and $A_{uv}$, or obtains the texture coordinates of the predicted projected point of the to-be-decoded vertex on the first edge based on a residual between $A_{uv}$ and $\overrightarrow{XA}_{uv}$, where

A is a vertex N on the first edge of the target triangle, $\overrightarrow{AX}_{uv}$ is a vector from the vertex N on the first edge of the target triangle to predicted texture coordinates of a predicted projected point X of the to-be-decoded vertex C on the first edge, $A_{uv}$ is real texture coordinates of the vertex N on the first edge of the target triangle, and $\overrightarrow{XA}_{uv}$ is a vector from the predicted projected point X of the to-be-decoded vertex C on the first edge to texture coordinates of the vertex N on the first edge of the target triangle; or A is a vertex P on the first edge of the target triangle, $\overrightarrow{AX}_{uv}$ is a vector from the vertex P on the first edge of the target triangle to predicted texture coordinates of a predicted projected point X of the to-be-decoded vertex C on the first edge, $A_{uv}$ is real texture coordinates of the vertex P on the first edge of the target triangle, and $\overrightarrow{XA}_{uv}$ is a vector from the predicted projected point X of the to-be-decoded vertex C on the first edge to texture coordinates of the vertex P on the first edge of the target triangle.

Optionally, a manner of obtaining, by the decoder, the texture coordinates of the predicted projected point of the to-be-decoded vertex on the first edge is the same as a manner of obtaining, by the encoder, texture coordinates of a predicted projected point of a corresponding to-be-encoded vertex on the first edge. Details are not described herein again.

Optionally, that the decoder obtains the predicted texture coordinates of the to-be-decoded vertex based on the determining result and the texture coordinates of the predicted projected point includes:

In a case that the determining result indicates that the first triangle is a degenerate triangle, the decoder performs decoding to obtain a target identifier, where the target identifier is used to identify a magnitude relationship between $|\overrightarrow{C_1C}_{uv}|$ and $|\overrightarrow{C_2C}_{uv}|$, and

the decoder obtains the predicted texture coordinates of the to-be-decoded vertex based on the target identifier and the texture coordinates of the predicted projected point, where

$\overrightarrow{C_1C}_{uv}$ is a vector between a predicted point $C_1$ and texture coordinates of the to-be-decoded vertex C, and $\overrightarrow{C_2C}_{uv}$ is a vector between a predicted point $C_2$ and the texture coordinates of the to-be-decoded vertex C.

Optionally, that the decoder obtains the predicted texture coordinates of the to-be-decoded vertex based on the target identifier and the texture coordinates of the predicted projected point includes:

The decoder obtains the predicted texture coordinates of the to-be-decoded vertex based on $X_{uv}$, $\overrightarrow{XC}_{uv}$, and the magnitude relationship between $|\overrightarrow{C_1C}_{uv}|$ and $|\overrightarrow{C_2C}_{uv}|$, where

$X_{uv}$ is predicted texture coordinates of a predicted projected point X of the to-be-decoded vertex C on the first edge, and $\overrightarrow{XC}_{uv}$ is a predicted vector from the predicted projected point X of the to-be-decoded vertex C on the first edge to texture coordinates of the to-be-decoded vertex C.

Optionally, that the decoder obtains the predicted texture coordinates of the to-be-decoded vertex based on the determining result and the texture coordinates of the predicted projected point includes:

In a case that the determining result indicates that the first triangle is not a degenerate triangle, the decoder obtains the predicted texture coordinates of the to-be-decoded vertex based on $X_{uv}$, $\overrightarrow{XC}_{uv}$, and a magnitude relationship between $|\overrightarrow{C_1O}_{uv}|$ and $|o_{uv}|$, where

$X_{uv}$ is predicted texture coordinates of a predicted projected point X of the to-be-decoded vertex C on the first edge, $\overrightarrow{XC}_{uv}$ is a predicted vector from the predicted projected point X of the to-be-decoded vertex C on the first edge to texture coordinates of the to-be-decoded vertex C, $\overrightarrow{C_1O}_{uv}$ is a vector between a predicted point $C_1$ and texture coordinates of a first vertex O corresponding to the first edge, and $\overrightarrow{C_2O}_{uv}$ is a vector between a predicted point $C_2$ and the texture coordinates of the first vertex O corresponding to the first edge.

Optionally, a manner of obtaining, by the decoder, the predicted texture coordinates of the to-be-decoded vertex is the same as a manner of obtaining, by the encoder, predicted texture coordinates of a corresponding to-be-encoded vertex. Details are not described herein again.

Optionally, that the decoder determines a target triangle based on the connectivity includes:

The decoder selects the first edge from an edge set, where the edge set is a set including edges of a triangle constructed based on the reconstructed connectivity; and
the decoder determines the target triangle based on the first edge.

Optionally, before the decoder selects the first edge from the edge set, the method further includes:

The decoder selects an initial triangle based on the connectivity; and
the decoder decodes texture coordinates of three vertices of the initial triangle, and adds three edges of the initial triangle to the edge set.

Optionally, after the decoder performs decoding based on the predicted texture coordinates of the to-be-decoded vertex and the residual obtained by decoding the to-be-decoded vertex, to obtain the real texture coordinates of the to-be-decoded vertex, the method further includes:

The decoder adds a second edge of the target triangle to the edge set, and deletes the first edge from the edge set, where the second edge is an edge of the target triangle that is not included in the edge set.

It should be noted that this embodiment of this application is a reverse process of encoding, and a decoding block diagram is shown in FIG. 7. To be specific, in a UV coordinate decoding process, geometry information and a connectivity are first decoded, then a bitstream is decoded based on the geometry information and the connectivity to obtain a residual, then predicted UV coordinates are obtained, and finally, real UV coordinates can be obtained by using the residual and the predicted UV coordinates, to implement decoding of UV coordinates. For a manner of predicting UV coordinates in this embodiment of this application, refer to the descriptions on the encoder side. Details are not described herein again.

To sum up, a specific implementation process of decoding UV coordinates in this embodiment of this application is as follows:

Step SP1: Perform entropy decoding on a UV coordinate bitstream.
Step SP2: Decode UV coordinates of three vertices of an initial triangle, where a predicted value is not calculated herein, and UV coordinates, instead of residuals, of the initial triangle are directly encoded; and add three edges of the initial triangle to an edge set.
Step SP3: Select an edge $\tau$ from the edge set according to an access criterion, decode UV coordinates of an opposite vertex of a new triangle including $\tau$, and first calculate predicted values of UV coordinates of a to-be-decoded vertex by using a three-dimension-to-two-dimension mapping relationship of a triangle and using a calculation manner consistent with that used by the encoder, and then add the predicted values to a residual obtained through entropy decoding to obtain reconstructed UV coordinates.
Step SP4: Add two edges of the new triangle to the edge set, remove the edge $\tau$ at the top of the set, obtain a next edge from the edge set, continue to decode UV coordinates of an opposite vertex of a triangle adjacent to the edge, and return to step SP4 until UV coordinates of all vertices are decoded.

It should be noted that this embodiment of this application is a peer-side method embodiment corresponding to the foregoing embodiment of the encoding method, the decoding process is a reverse process of encoding, and all implementations on the encoder side are applicable to the embodiment on the decoder side, with the same technical effect achieved. Details are not described herein again.

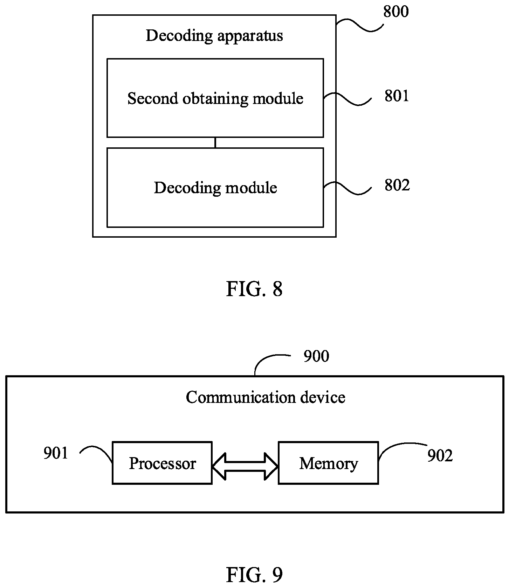

As shown in FIG. 8, an embodiment of this application further provides a decoding apparatus 800, including:

a second obtaining module 801, configured to decode an obtained bitstream of a target three-dimensional mesh to obtain geometry information and a connectivity of the target three-dimensional mesh; and
a decoding module 802, configured to perform decoding based on the geometry information and the connectivity to obtain texture coordinates of a vertex in the target three-dimensional mesh.

Optionally, the decoding module 802 includes:

a second determining unit, configured to determine a target triangle based on the connectivity, where the target triangle includes a first edge and a to-be-decoded vertex;

a second obtaining unit, configured to predict texture coordinates of the to-be-decoded vertex based on geometry information corresponding to three vertices of the target triangle and real texture coordinates of a vertex on the first edge, to obtain predicted texture coordinates of the to-be-decoded vertex; and

a decoding unit, configured to perform decoding based on the predicted texture coordinates of the to-be-decoded vertex and a residual obtained by decoding the to-be-decoded vertex, to obtain real texture coordinates of the to-be-decoded vertex.

Optionally, the second obtaining unit is configured to:

obtain texture coordinates of a predicted projected point of the to-be-decoded vertex on the first edge based on geometry information corresponding to each vertex of the target triangle and the real texture coordinates of the vertex on the first edge;

obtain a determining result indicating whether a first triangle including the first edge and a first vertex corresponding to the first edge is a degenerate triangle, where the first vertex is an opposite vertex of the first edge of the first triangle, and the first triangle and the target triangle have a common first edge; and

obtain the predicted texture coordinates of the to-be-decoded vertex based on the determining result and the texture coordinates of the predicted projected point.

Optionally, an implementation of obtaining the texture coordinates of the predicted projected point of the to-be-decoded vertex on the first edge based on the geometry information corresponding to each vertex of the target triangle and the real texture coordinates of the vertex on the first edge includes:

obtaining the texture coordinates of the predicted projected point of the to-be-decoded vertex on the first edge based on a sum of $\overrightarrow{AX}_{uv}$ and $A_{uv}$, or obtaining the texture coordinates of the predicted projected point of the to-be-decoded vertex on the first edge based on a residual between $A_{uv}$ and $\overrightarrow{XA}_{uv}$, where

A is a vertex N on the first edge of the target triangle, $\overrightarrow{AX}_{uv}$ is a vector from the vertex N on the first edge of the target triangle to predicted texture coordinates of a predicted projected point X of the to-be-decoded vertex C on the first edge, $A_{uv}$ is real texture coordinates of the vertex N on the first edge of the target triangle, and $\overrightarrow{XA}_{uv}$ is a vector from the predicted projected point X of the to-be-decoded vertex C on the first edge to texture coordinates of the vertex N on the first edge of the target triangle; or A is a vertex P on the first edge of the target triangle, $\overrightarrow{AX}_{uv}$ is a vector from the vertex P on the first edge of the target triangle to predicted texture coordinates of a predicted projected point X of the to-be-decoded vertex C on the first edge, $A_{uv}$ is real texture coordinates of the vertex P on the first edge of the target triangle, and $\overrightarrow{XA}_{uv}$ is a vector from the predicted projected point X of the to-be-decoded vertex C on the first edge to texture coordinates of the vertex P on the first edge of the target triangle.

Optionally, an implementation of obtaining the predicted texture coordinates of the to-be-decoded vertex based on the determining result and the texture coordinates of the predicted projected point includes:

in a case that the determining result indicates that the first triangle is a degenerate triangle, performing decoding to obtain a target identifier, where the target identifier is used to identify a magnitude relationship between $|\overrightarrow{C_1C}_{uv}|$ and $|\overrightarrow{C_2C}_{uv}|$; and

obtaining the predicted texture coordinates of the to-be-decoded vertex based on the target identifier and the texture coordinates of the predicted projected point, where

$\overrightarrow{C_1C}_{uv}$ is a vector between a predicted point $C_1$ and texture coordinates of the to-be-decoded vertex C, and $\overrightarrow{C_2C}_{uv}$ is a vector between a predicted point $C_2$ and the texture coordinates of the to-be-decoded vertex C.

Optionally, an implementation of obtaining the predicted texture coordinates of the to-be-decoded vertex based on the target identifier and the texture coordinates of the predicted projected point includes:

obtaining the predicted texture coordinates of the to-be-decoded vertex based on $X_{uv}$, $\overrightarrow{XC}_{uv}$, and the magnitude relationship between $|\overrightarrow{C_1C}_{uv}|$ and $|\overrightarrow{C_2C}_{uv}|$, where

$X_{uv}$ is predicted texture coordinates of a predicted projected point X of the to-be-decoded vertex C on the first edge, and $\overrightarrow{XC}_{uv}$ is a predicted vector from the predicted projected point X of the to-be-decoded vertex C on the first edge to texture coordinates of the to-be-decoded vertex C.

Optionally, an implementation of obtaining the predicted texture coordinates of the to-be-decoded vertex based on the determining result and the texture coordinates of the predicted projected point includes:

in a case that the determining result indicates that the first triangle is not a degenerate triangle, obtaining the predicted texture coordinates of the to-be-decoded vertex based on $X_{uv}$, $\overrightarrow{XC}_{uv}$, and a magnitude relationship between $|\overrightarrow{C_1O}_{uv}|$ and $|\overrightarrow{C_2O}_{uv}|$, where

$X_{uv}$ is predicted texture coordinates of a predicted projected point X of the to-be-decoded vertex C on the first edge, $\overrightarrow{XC}_{uv}$ is a predicted vector from the predicted projected point X of the to-be-decoded vertex C on the first edge to texture coordinates of the to-be-decoded vertex C, $\overrightarrow{C_1O}_{uv}$ is a vector between a predicted point $C_1$ and texture coordinates of a first vertex O corresponding to the first edge, and $\overrightarrow{C_2O}_{uv}$ is a vector between a predicted point $C_2$ and the texture coordinates of the first vertex O corresponding to the first edge.

Optionally, the second determining unit is configured to:

select the first edge from an edge set, where the edge set is a set including edges of a triangle constructed based on the reconstructed connectivity; and
determine the target triangle based on the first edge.

Optionally, before the second determining unit selects the first edge from the edge set, the decoding module further includes:

a second selection unit, configured to select an initial triangle based on the connectivity; and
a third processing unit, configured to decode texture coordinates of three vertices of the initial triangle, and add three edges of the initial triangle to the edge set.

Optionally, after the decoding unit performs decoding based on the predicted texture coordinates of the to-be-decoded vertex and the residual obtained by decoding the to-be-decoded vertex, to obtain the real texture coordinates of the to-be-decoded vertex, the decoding module further includes:
a fourth processing unit, configured to add a second edge of the target triangle to the edge set, and delete the first edge from the edge set, where the second edge is an edge of the target triangle that is not included in the edge set.

It should be noted that the apparatus embodiment describes an apparatus corresponding to the foregoing method, and all implementations of the foregoing method embodiment are applicable to the apparatus embodiment, with the same technical effect achieved. Details are not described herein again.

Optionally, an embodiment of this application further provides a decoding device, including a processor, a memory, and a program or instructions stored in the memory and capable of running on the processor. When the program or instructions are executed by the processor, the processes of the foregoing decoding method embodiment are implemented, with the same technical effect achieved. To avoid repetition, details are not described herein again.

An embodiment of this application further provides a computer-readable storage medium. The computer-readable storage medium stores a program or instructions. When the program or instructions are executed by a processor, the processes of the foregoing decoding method embodiment are implemented, with the same technical effect achieved. To avoid repetition, details are not described herein again.

For example, the computer-readable storage medium is a read-only memory (Read-Only Memory, ROM for short), a random access memory (Random Access Memory, RAM for short), a magnetic disk, or an optical disc.

An embodiment of this application further provides a decoding device, including a processor and a communication interface. The processor is configured to decode an obtained bitstream of a target three-dimensional mesh to obtain geometry information and a connectivity of the target three-dimensional mesh, and perform decoding based on the geometry information and the connectivity to obtain texture coordinates of a vertex in the target three-dimensional mesh.

Optionally, the processor is configured to:

determine a target triangle based on the connectivity, where the target triangle includes a first edge and a to-be-decoded vertex;
predict texture coordinates of the to-be-decoded vertex based on geometry information corresponding to three vertices of the target triangle and real texture coordinates of a vertex on the first edge, to obtain predicted texture coordinates of the to-be-decoded vertex; and
perform decoding based on the predicted texture coordinates of the to-be-decoded vertex and a residual obtained by decoding the to-be-decoded vertex, to obtain real texture coordinates of the to-be-decoded vertex.

Optionally, the processor is configured to:

obtain texture coordinates of a predicted projected point of the to-be-decoded vertex on the first edge based on geometry information corresponding to each vertex of the target triangle and the real texture coordinates of the vertex on the first edge;

obtain a determining result indicating whether a first triangle including the first edge and a first vertex corresponding to the first edge is a degenerate triangle, where the first vertex is an opposite vertex of the first edge of the first triangle, and the first triangle and the target triangle have a common first edge; and

obtain the predicted texture coordinates of the to-be-decoded vertex based on the determining result and the texture coordinates of the predicted projected point.

Optionally, the processor is configured to:

obtain the texture coordinates of the predicted projected point of the to-be-decoded vertex on the first edge based on a sum of $\overrightarrow{AX}_{uv}$ and $A_{uv}$, or obtain the texture coordinates of the predicted projected point of the to-be-decoded vertex on the first edge based on a residual between $A_{uv}$ and $\overrightarrow{XA}_{uv}$, where

A is a vertex N on the first edge of the target triangle, $\overrightarrow{AX}_{uv}$ is a vector from the vertex N on the first edge of the target triangle to predicted texture coordinates of a predicted projected point X of the to-be-decoded vertex C on the first edge, $A_{uv}$ is real texture coordinates of the vertex N on the first edge of the target triangle, and $\overrightarrow{XA}_{uv}$ is a vector from the predicted projected point X of the to-be-decoded vertex C on the first edge to texture coordinates of the vertex N on the first edge of the target triangle; or A is a vertex P on the first edge of the target triangle, $\overrightarrow{AX}_{uv}$ is a vector from the vertex P on the first edge of the target triangle to predicted texture coordinates of a predicted projected point X of the to-be-decoded vertex C on the first edge, $A_{uv}$ is real texture coordinates of the vertex P on the first edge of the target triangle, and $\overrightarrow{XA}_{uv}$ is a vector from the predicted projected point X of the to-be-decoded vertex C on the first edge to texture coordinates of the vertex P on the first edge of the target triangle.

Optionally, the processor is configured to:

in a case that the determining result indicates that the first triangle is a degenerate triangle, perform decoding to obtain a target identifier, where the target identifier is used to identify a magnitude relationship between $|\overrightarrow{C_1C}_{uv}|$ and $|\overrightarrow{C_2C}_{uv}|$; and

obtain the predicted texture coordinates of the to-be-decoded vertex based on the target identifier and the texture coordinates of the predicted projected point, where

$\overrightarrow{C_1C}_{uv}$ is a vector between a predicted point $C_1$ and texture coordinates of the to-be-decoded vertex C, and $\overrightarrow{C_2C}_{uv}$ is a vector between a predicted point $C_2$ and the texture coordinates of the to-be-decoded vertex C.

Optionally, the processor is configured to:

obtain the predicted texture coordinates of the to-be-decoded vertex based on $X_{uv}$, $\overrightarrow{XC}_{uv}$, and the magnitude relationship between $|\overrightarrow{C_1C}_{uv}|$ and $|\overrightarrow{C_2C}_{uv}|$, where

$X_{uv}$ is predicted texture coordinates of a predicted projected point X of the to-be-decoded vertex C on the first edge, and $\overrightarrow{XC}_{uv}$ is a predicted vector from the predicted projected point X of the to-be-decoded vertex C on the first edge to texture coordinates of the to-be-decoded vertex C.

Optionally, the processor is configured to:

in a case that the determining result indicates that the first triangle is not a degenerate triangle, obtain the predicted texture coordinates of the to-be-decoded vertex based on $X_{uv}$, $\overrightarrow{XC}_{uv}$, and a magnitude relationship between $|\overrightarrow{C_1O}_{uv}|$ and $|\overrightarrow{C_2O}_{uv}|$, where

$X_{uv}$ is predicted texture coordinates of a predicted projected point X of the to-be-decoded vertex C on the first edge, $\overrightarrow{XC}_{uv}$ is a predicted vector from the predicted projected point X of the to-be-decoded vertex C on the first edge to texture coordinates of the to-be-decoded vertex C, $\overrightarrow{C_1O}_{uv}$ is a vector between a predicted point $C_1$ and texture coordinates of a first vertex O corresponding to the first edge, and $\overrightarrow{C_2O}_{uv}$ is a vector between a predicted point $C_2$ and the texture coordinates of the first vertex O corresponding to the first edge.

Optionally, the processor is configured to:

select the first edge from an edge set, where the edge set is a set including edges of a triangle constructed based on the reconstructed connectivity; and

determine the target triangle based on the first edge.

Optionally, the processor is further configured to:

select an initial triangle based on the connectivity; and
decode texture coordinates of three vertices of the initial triangle, and add three edges of the initial triangle to the edge set.

Optionally, the processor is further configured to:
add a second edge of the target triangle to the edge set, and delete the first edge from the edge set, where the second edge is an edge of the target triangle that is not included in the edge set.

The decoding device embodiment corresponds to the foregoing decoding method embodiment, and all implementation processes and implementations of the foregoing method embodiment are applicable to the decoding device embodiment, with the same technical effect achieved.

Specifically, an embodiment of this application further provides a decoding device. Specifically, a structure of the decoding device is shown in FIG. 5. Details are not described herein again. Specifically, the decoding device in this embodiment of this application further includes instructions or a program stored in the memory and capable of running on the processor, and the processor invokes the instructions or program in the memory to perform the method performed by the modules shown in FIG. 8, with the same technical effect achieved. To avoid repetition, details are not described herein again.

An embodiment of this application further provides a readable storage medium. The readable storage medium stores a program or instructions. When the program or instructions are executed by a processor, the processes of the foregoing decoding method embodiment are implemented, with the same technical effect achieved. To avoid repetition, details are not described herein again.

The processor is a processor in the decoding device in the foregoing embodiments. The readable storage medium includes a computer-readable storage medium, for example, a computer read-only memory ROM, a random access memory RAM, a magnetic disk, or an optical disc.

Optionally, as shown in FIG. 9, an embodiment of this application further provides a communication device 900, including a processor 901 and a memory 902. The memory 902 stores a program or instructions capable of running on the processor 901. For example, in a case that the communication device 900 is an encoding device, when the program or instructions are executed by the processor 901, the steps of the foregoing encoding method embodiment are implemented, with the same technical effect achieved. In a case that the communication device 900 is a decoding device, when the program or instructions are executed by the processor 901, the steps of the foregoing decoding method embodiment are implemented, with the same technical effect achieved. To avoid repetition, details are not described herein again.

An embodiment of this application further provides a chip. The chip includes a processor and a communication interface. The communication interface is coupled to the processor. The processor is configured to run a program or instructions, to implement the processes of the foregoing encoding or decoding method embodiment, with the same technical effect achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program or program product. The computer program or program product is stored in a storage medium. The computer program or program product is executed by at least one processor to implement the processes of the foregoing encoding or decoding method embodiment, with the same technical effect achieved. To avoid repetition, details are not described herein again.

An embodiment of this application further provides a communication system, including at least an encoding device and a decoding device. The encoding device may be configured to perform the steps of the foregoing encoding method, and the decoding device may be configured to perform the steps of the foregoing decoding method, with the same technical effect achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the foregoing descriptions of the implementations, a person skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

**Claims**

1.  An encoding method, comprising:

    reconstructing, by an encoder, geometry information and a connectivity of a target three-dimensional mesh based on an encoding result for the geometry information and the connectivity of the target three-dimensional mesh; and
    encoding, by the encoder, texture coordinates of a vertex in the target three-dimensional mesh based on reconstructed geometry information and a reconstructed connectivity.

2.  The method according to claim 1, wherein the encoding, by the encoder, texture coordinates of a vertex in the target three-dimensional mesh based on reconstructed geometry information and a reconstructed connectivity comprises:

    determining, by the encoder, a target triangle based on the reconstructed connectivity, wherein the target triangle comprises a first edge and a to-be-encoded vertex;
    predicting, by the encoder, texture coordinates of the to-be-encoded vertex based on reconstructed geometry information corresponding to three vertices of the target triangle and real texture coordinates of a vertex on the first edge, to obtain predicted texture coordinates of the to-be-encoded vertex; and
    encoding, by the encoder, the texture coordinates of the to-be-encoded vertex based on a residual between real texture coordinates of the to-be-encoded vertex and the predicted texture coordinates.

3.  The method according to claim 2, wherein the predicting, by the encoder, texture coordinates of the to-be-encoded vertex based on reconstructed geometry information corresponding to three vertices of the target triangle and real texture coordinates of a vertex on the first edge, to obtain predicted texture coordinates of the to-be-encoded vertex comprises:

    obtaining, by the encoder, texture coordinates of a predicted projected point of the to-be-encoded vertex on the first edge based on reconstructed geometry information corresponding to each vertex of the target triangle and the real texture coordinates of the vertex on the first edge;
    obtaining, by the encoder, a determining result indicating whether a first triangle comprising the first edge and a first vertex corresponding to the first edge is a degenerate triangle, wherein the first vertex is an opposite vertex of the first edge of the first triangle, and the first triangle and the target triangle have a common first edge; and
    obtaining, by the encoder, the predicted texture coordinates of the to-be-encoded vertex based on the determining result and the texture coordinates of the predicted projected point.

4.  The method according to claim 3, wherein the obtaining, by the encoder, texture coordinates of a predicted projected point of the to-be-encoded vertex on the first edge based on reconstructed geometry information corresponding to each vertex of the target triangle and the real texture coordinates of the vertex on the first edge comprises:

    obtaining, by the encoder, the texture coordinates of the predicted projected point of the to-be-encoded vertex on the first edge based on a sum of $\overrightarrow{AX}_{uv}$ and $A_{uv}$, or obtaining the texture coordinates of the predicted projected point of the to-be-encoded vertex on the first edge based on a residual between $A_{uv}$ and $\overrightarrow{XA}_{uv}$, wherein A is a vertex N on the first edge of the target triangle, $\overrightarrow{AX}_{uv}$ is a vector from the vertex N on the first edge of the target triangle to texture coordinates of a predicted projected point X of the to-be-encoded vertex C on the first edge, $A_{uv}$ is real texture coordinates of the vertex N on the first edge of the target triangle, and $\overrightarrow{XA}_{uv}$ is a vector from the predicted projected point X of the to-be-encoded vertex C on the first edge to texture coordinates of the vertex N on the first edge of the target triangle; or A is a vertex P on the first edge of the target triangle, $\overrightarrow{AX}_{uv}$ is a vector from the vertex P on the first edge of the target triangle to texture coordinates of a predicted projected point X of the to-be-encoded vertex C on the first edge, $A_{uv}$ is real texture coordinates of the vertex P on the first edge of the target triangle, and $\overrightarrow{XA}_{uv}$ is a vector from the predicted projected point X of the to-be-encoded vertex C on the first edge to texture coordinates of the vertex P on the first edge of the target triangle.

5. The method according to claim 3, wherein the obtaining, by the encoder, the predicted texture coordinates of the to-be-encoded vertex based on the determining result and the texture coordinates of the predicted projected point comprises:

in a case that the determining result indicates that the first triangle is a degenerate triangle, obtaining, by the encoder, the predicted texture coordinates of the to-be-encoded vertex based on $X_{uv}$, $\overrightarrow{XC}_{uv}$, and a magnitude relationship between $|\overrightarrow{C_1C}_{uv}|$ and $|\overrightarrow{C_2C}_{uv}|$, wherein $X_{uv}$ is predicted texture coordinates of a predicted projected point X of the to-be-encoded vertex C on the first edge, $\overrightarrow{XC}_{uv}$ is a predicted vector from the predicted projected point X of the to-be-encoded vertex C on the first edge to texture coordinates of the to-be-encoded vertex C, $\overrightarrow{C_1C}_{uv}$ is a vector between a predicted point $C_1$ and the texture coordinates of the to-be-encoded vertex C, and $\overrightarrow{C_2C}_{uv}$ is a vector between a predicted point $C_2$ and the texture coordinates of the to-be-encoded vertex C.

6. The method according to claim 5, further comprising:

obtaining, by the encoder, a target identifier, wherein the target identifier is used to identify the magnitude relationship between $|\overrightarrow{C_1C}_{uv}|$ and $|\overrightarrow{C_2C}_{uv}|$; and
performing, by the encoder, entropy encoding on the target identifier.

7. The method according to claim 3, wherein the obtaining, by the encoder, the predicted texture coordinates of the to-be-encoded vertex based on the determining result and the texture coordinates of the predicted projected point comprises:

in a case that the determining result indicates that the first triangle is not a degenerate triangle, obtaining, by the encoder, the predicted texture coordinates of the to-be-encoded vertex based on $X_{uv}$, $\overrightarrow{XC}_{uv}$, and a magnitude relationship between $|\overrightarrow{C_1O}_{uv}|$ and $|\overrightarrow{C_2O}_{uv}|$, wherein $X_{uv}$ is predicted texture coordinates of a predicted projected point X of the to-be-encoded vertex C on the first edge, $\overrightarrow{XC}_{uv}$ is a predicted vector from the predicted projected point X of the to-be-encoded vertex C on the first edge to texture coordinates of the to-be-encoded vertex C, $\overrightarrow{C_1O}_{uv}$ is a vector between a predicted point $C_1$ and texture coordinates of a first vertex O corresponding to the first edge, and $\overrightarrow{C_2O}_{uv}$ is a vector between a predicted point $C_2$ and the texture coordinates of the first vertex O corresponding to the first edge.

8. The method according to claim 2, wherein the determining, by the encoder, a target triangle based on the reconstructed connectivity comprises:

selecting, by the encoder, the first edge from an edge set, wherein the edge set is a set comprising edges of a triangle constructed based on the reconstructed connectivity; and
determining, by the encoder, the target triangle based on the first edge.

9. The method according to claim 8, wherein before the selecting, by the encoder, the first edge from an edge set, the method further comprises:

selecting, by the encoder, an initial triangle based on the reconstructed connectivity; and
encoding, by the encoder, texture coordinates of three vertices of the initial triangle, and adding three edges of the initial triangle to the edge set.

10. The method according to claim 9, wherein the encoding, by the encoder, texture coordinates of three vertices of the initial triangle comprises:

directly encoding, by the encoder, texture coordinates of the 1st vertex of the initial triangle;
predicting, by the encoder, an edge by using the texture coordinates of the 1st vertex to obtain texture coordinates

of the 2nd vertex of the initial triangle, and obtaining texture coordinates of the 3rd vertex of the initial triangle through similar-triangles-based predictive coding; and

encoding, by the encoder, the texture coordinates of the 2nd vertex and the 3rd vertex of the initial triangle.

11. The method according to claim 8, wherein after the encoding, by the encoder, the texture coordinates of the to-be-encoded vertex based on a residual between real texture coordinates of the to-be-encoded vertex and the predicted texture coordinates, the method further comprises:

adding, by the encoder, a second edge of the target triangle to the edge set, and deleting the first edge from the edge set, wherein the second edge is an edge of the target triangle that is not comprised in the edge set.

12. A decoding method, comprising:

decoding, by a decoder, an obtained bitstream of a target three-dimensional mesh to obtain geometry information and a connectivity of the target three-dimensional mesh; and

performing, by the decoder, decoding based on the geometry information and the connectivity to obtain texture coordinates of a vertex in the target three-dimensional mesh.

13. The method according to claim 12, wherein the performing, by the decoder, decoding based on the geometry information and the connectivity to obtain texture coordinates of a vertex in the target three-dimensional mesh comprises:

determining, by the decoder, a target triangle based on the connectivity, wherein the target triangle comprises a first edge and a to-be-decoded vertex;

predicting, by the decoder, texture coordinates of the to-be-decoded vertex based on geometry information corresponding to three vertices of the target triangle and real texture coordinates of a vertex on the first edge, to obtain predicted texture coordinates of the to-be-decoded vertex; and

performing, by the decoder, decoding based on the predicted texture coordinates of the to-be-decoded vertex and a residual obtained by decoding the to-be-decoded vertex, to obtain real texture coordinates of the to-be-decoded vertex.

14. The method according to claim 13, wherein the predicting, by the decoder, texture coordinates of the to-be-decoded vertex based on geometry information corresponding to three vertices of the target triangle and real texture coordinates of a vertex on the first edge, to obtain predicted texture coordinates of the to-be-decoded vertex comprises:

obtaining, by the decoder, texture coordinates of a predicted projected point of the to-be-decoded vertex on the first edge based on geometry information corresponding to each vertex of the target triangle and the real texture coordinates of the vertex on the first edge;

obtaining, by the decoder, a determining result indicating whether a first triangle comprising the first edge and a first vertex corresponding to the first edge is a degenerate triangle, wherein the first vertex is an opposite vertex of the first edge of the first triangle, and the first triangle and the target triangle have a common first edge; and

obtaining, by the decoder, the predicted texture coordinates of the to-be-decoded vertex based on the determining result and the texture coordinates of the predicted projected point.

15. The method according to claim 14, wherein the obtaining, by the decoder, texture coordinates of a predicted projected point of the to-be-decoded vertex on the first edge based on geometry information corresponding to each vertex of the target triangle and the real texture coordinates of the vertex on the first edge comprises:

obtaining, by the decoder, the texture coordinates of the predicted projected point of the to-be-decoded vertex on the first edge based on a sum of $\overrightarrow{AX}_{uv}$ and $A_{uv}$, or obtaining the texture coordinates of the predicted projected point of the to-be-decoded vertex on the first edge based on a residual between $A_{uv}$ and $\overrightarrow{XA}_{uv}$, wherein A is a vertex N on the first edge of the target triangle, $\overrightarrow{AX}_{uv}$ is a vector from the vertex N on the first edge of the target triangle to predicted texture coordinates of a predicted projected point X of the to-be-decoded vertex C on the first edge, $A_{uv}$ is real texture coordinates of the vertex N on the first edge of the target triangle, and $\overrightarrow{XA}_{uv}$ is a vector from the predicted projected point X of the to-be-decoded vertex C on the first edge to texture coordinates of the vertex N on the first edge of the target triangle; or A is a vertex P on the first edge of the target triangle, $\overrightarrow{AX}_{uv}$ is a vector from the vertex P on the first edge of the target triangle to predicted texture coordinates of a predicted projected point X of the to-be-decoded vertex C on the first edge, $A_{uv}$ is real texture coordinates of the vertex P on the first edge of the target triangle, and $\overrightarrow{XA}_{uv}$ is a vector from the predicted projected point X of the to-be-decoded vertex C on the first edge to texture coordinates of the vertex P on the first edge of the target triangle.

16. The method according to claim 14, wherein the obtaining, by the decoder, the predicted texture coordinates of the to-be-decoded vertex based on the determining result and the texture coordinates of the predicted projected point comprises:

in a case that the determining result indicates that the first triangle is a degenerate triangle, performing, by the decoder, decoding to obtain a target identifier, wherein the target identifier is used to identify a magnitude relationship between $|\overrightarrow{C_1C}_{uv}|$ and $|\overrightarrow{C_2C}_{uv}|$; and
obtaining, by the decoder, the predicted texture coordinates of the to-be-decoded vertex based on the target identifier and the texture coordinates of the predicted projected point, wherein
$\overrightarrow{C_1C}_{uv}$ is a vector between a predicted point $C_1$ and texture coordinates of the to-be-decoded vertex C, and $\overrightarrow{C_2C}_{uv}$ is a vector between a predicted point $C_2$ and the texture coordinates of the to-be-decoded vertex C.

17. The method according to claim 16, wherein the obtaining, by the decoder, the predicted texture coordinates of the to-be-decoded vertex based on the target identifier and the texture coordinates of the predicted projected point comprises:

obtaining, by the decoder, the predicted texture coordinates of the to-be-decoded vertex based on $X_{uv}$, $\overrightarrow{XC}_{uv}$, and the magnitude relationship between $|\overrightarrow{C_1C}_{uv}|$ and $|\overrightarrow{C_2C}_{uv}|$, wherein
$X_{uv}$ is predicted texture coordinates of a predicted projected point X of the to-be-decoded vertex C on the first edge, and $\overrightarrow{XC}_{uv}$ is a predicted vector from the predicted projected point X of the to-be-decoded vertex C on the first edge to texture coordinates of the to-be-decoded vertex C.

18. The method according to claim 14, wherein the obtaining, by the decoder, the predicted texture coordinates of the to-be-decoded vertex based on the determining result and the texture coordinates of the predicted projected point comprises:

in a case that the determining result indicates that the first triangle is not a degenerate triangle, obtaining, by the decoder, the predicted texture coordinates of the to-be-decoded vertex based on $X_{uv}$, $\overrightarrow{XC}_{uv}$, and a magnitude relationship between $|\overrightarrow{C_1O}_{uv}|$ and $|\overrightarrow{C_2O}_{uv}|$, wherein
$X_{uv}$ is predicted texture coordinates of a predicted projected point X of the to-be-decoded vertex C on the first edge, $\overrightarrow{XC}_{uv}$ is a predicted vector from the predicted projected point X of the to-be-decoded vertex C on the first edge to texture coordinates of the to-be-decoded vertex C, $\overrightarrow{C_1O}_{uv}$ is a vector between a predicted point $C_1$ and texture coordinates of a first vertex O corresponding to the first edge, and $\overrightarrow{C_2O}_{uv}$ is a vector between a predicted point $C_2$ and the texture coordinates of the first vertex O corresponding to the first edge.

19. The method according to claim 13, wherein the determining, by the decoder, a target triangle based on the connectivity comprises:

selecting, by the decoder, the first edge from an edge set, wherein the edge set is a set comprising edges of a triangle constructed based on the reconstructed connectivity; and
determining, by the decoder, the target triangle based on the first edge.

20. The method according to claim 19, wherein before the selecting, by the decoder, the first edge from an edge set, the method further comprises:

selecting, by the decoder, an initial triangle based on the connectivity; and
decoding, by the decoder, texture coordinates of three vertices of the initial triangle, and adding three edges of the initial triangle to the edge set.

21. The method according to claim 19, wherein after the performing, by the decoder, decoding based on the predicted texture coordinates of the to-be-decoded vertex and a residual obtained by decoding the to-be-decoded vertex, to obtain real texture coordinates of the to-be-decoded vertex, the method further comprises:
adding, by the decoder, a second edge of the target triangle to the edge set, and deleting the first edge from the edge set, wherein the second edge is an edge of the target triangle that is not comprised in the edge set.

**22.** An encoding apparatus, comprising:

a reconstruction module, configured to reconstruct geometry information and a connectivity of a target three-dimensional mesh based on an encoding result for the geometry information and the connectivity of the target three-dimensional mesh; and
an encoding module, configured to encode texture coordinates of a vertex in the target three-dimensional mesh based on reconstructed geometry information and a reconstructed connectivity.

**23.** The apparatus according to claim 22, wherein the encoding module comprises:

a first determining unit, configured to determine a target triangle based on the reconstructed connectivity, wherein the target triangle comprises a first edge and a to-be-encoded vertex;
a first obtaining unit, configured to predict texture coordinates of the to-be-encoded vertex based on reconstructed geometry information corresponding to three vertices of the target triangle and real texture coordinates of a vertex on the first edge, to obtain predicted texture coordinates of the to-be-encoded vertex; and
an encoding unit, configured to encode the texture coordinates of the to-be-encoded vertex based on a residual between real texture coordinates of the to-be-encoded vertex and the predicted texture coordinates.

**24.** The apparatus according to claim 23, wherein the first obtaining unit is configured to:

obtain texture coordinates of a predicted projected point of the to-be-encoded vertex on the first edge based on reconstructed geometry information corresponding to each vertex of the target triangle and the real texture coordinates of the vertex on the first edge;
obtain a determining result indicating whether a first triangle comprising the first edge and a first vertex corresponding to the first edge is a degenerate triangle, wherein the first vertex is an opposite vertex of the first edge of the first triangle, and the first triangle and the target triangle have a common first edge; and
obtain the predicted texture coordinates of the to-be-encoded vertex based on the determining result and the texture coordinates of the predicted projected point.

**25.** The apparatus according to claim 24, wherein the obtaining texture coordinates of a predicted projected point of the to-be-encoded vertex on the first edge based on reconstructed geometry information corresponding to each of the target triangle and the real texture coordinates of the vertex on the first edge comprises:

obtaining the texture coordinates of the predicted projected point of the to-be-encoded vertex on the first edge based on a sum of $\overrightarrow{AX}_{uv}$ and $A_{uv}$, or obtaining the texture coordinates of the predicted projected point of the to-be-encoded vertex on the first edge based on a residual between $A_{uv}$ and $\overrightarrow{XA}_{uv}$, wherein A is a vertex N on the first edge of the target triangle, $\overrightarrow{AX}_{uv}$ is a vector from the vertex N on the first edge of the target triangle to texture coordinates of a predicted projected point X of the to-be-encoded vertex C on the first edge, $A_{uv}$ is real texture coordinates of the vertex N on the first edge of the target triangle, and $\overrightarrow{XA}_{uv}$ is a vector from the predicted projected point X of the to-be-encoded vertex C on the first edge to texture coordinates of the vertex N on the first edge of the target triangle; or A is a vertex P on the first edge of the target triangle, $\overrightarrow{AX}_{uv}$ is a vector from the vertex P on the first edge of the target triangle to texture coordinates of a predicted projected point X of the to-be-encoded vertex C on the first edge, $A_{uv}$ is real texture coordinates of the vertex P on the first edge of the target triangle, and $\overrightarrow{XA}_{uv}$ is a vector from the predicted projected point X of the to-be-encoded vertex C on the first edge to texture coordinates of the vertex P on the first edge of the target triangle.

**26.** The apparatus according to claim 24, wherein an implementation of obtaining the predicted texture coordinates of the to-be-encoded vertex based on the determining result and the texture coordinates of the predicted projected point comprises:

in a case that the determining result indicates that the first triangle is a degenerate triangle, obtaining the predicted texture coordinates of the to-be-encoded vertex based on $X_{uv}$, $\overrightarrow{XC}_{uv}$, and a magnitude relationship between $|\overrightarrow{C_1C}_{uv}|$ and $|\overrightarrow{C_2C}_{uv}|$, wherein $X_{uv}$ is predicted texture coordinates of a predicted projected point X of the to-be-encoded vertex C on the first edge, $|\overrightarrow{XC}_{uv}$ is a predicted vector from the predicted projected point X of the to-be-encoded vertex C on the first edge to texture coordinates of the to-be-encoded vertex C, $\overrightarrow{C_1C}_{uv}$ is a vector between a predicted point $C_1$ and the texture coordinates of the to-be-encoded vertex C, and $\overrightarrow{C_2C}_{uv}$ is a vector between a predicted point $C_2$ and the texture coordinates of the to-be-encoded vertex C.

**27.** The apparatus according to claim 26, further comprising:

a first obtaining module, configured to obtain a target identifier, wherein the target identifier is used to identify the magnitude relationship between $|\overline{C_1C_{uv}}|$ and $|\overline{C_2C_{uv}}|$; and
an entropy encoding module, configured to perform entropy encoding on the target identifier.

**28.** The apparatus according to claim 24, wherein an implementation of obtaining the predicted texture coordinates of the to-be-encoded vertex based on the determining result and the texture coordinates of the predicted projected point comprises:

in a case that the determining result indicates that the first triangle is not a degenerate triangle, obtaining the predicted texture coordinates of the to-be-encoded vertex based on $X_{uv}$, $\overrightarrow{XC}_{uv}$, and a magnitude relationship between $|\overrightarrow{C_1O}_{uv}|$ and $|\overrightarrow{C_2O}_{uv}|$, wherein
$X_{uv}$ is predicted texture coordinates of a predicted projected point X of the to-be-encoded vertex C on the first edge, $\overrightarrow{XC}_{uv}$ is a predicted vector from the predicted projected point X of the to-be-encoded vertex C on the first edge to texture coordinates of the to-be-encoded vertex C, $\overrightarrow{C_1O}_{uv}$ is a vector between a predicted point $C_1$ and texture coordinates of a first vertex O corresponding to the first edge, and $\overrightarrow{C_2O}_{uv}$ is a vector between a predicted point $C_2$ and the texture coordinates of the first vertex O corresponding to the first edge.

**29.** The apparatus according to claim 23, wherein the first determining unit is configured to:

select the first edge from an edge set, wherein the edge set is a set comprising edges of a triangle constructed based on the reconstructed connectivity; and
determine the target triangle based on the first edge.

**30.** The apparatus according to claim 29, wherein before the first determining unit selects the first edge from the edge set, the encoding module further comprises:

a first selection unit, configured to select an initial triangle based on the reconstructed connectivity; and
a first processing unit, configured to encode texture coordinates of three vertices of the initial triangle, and add three edges of the initial triangle to the edge set.

**31.** The apparatus according to claim 30, wherein the first processing unit is configured to:

directly encode texture coordinates of the 1st vertex of the initial triangle;
predict an edge by using the texture coordinates of the 1st vertex to obtain texture coordinates of the 2nd vertex of the initial triangle, and obtain texture coordinates of the 3rd vertex of the initial triangle through similar-triangles-based predictive coding; and
encode the texture coordinates of the 2nd vertex and the 3rd vertex of the initial triangle.

**32.** The apparatus according to claim 29, wherein after the encoding unit encodes the texture coordinates of the to-be-encoded vertex based on the residual between the real texture coordinates of the to-be-encoded vertex and the predicted texture coordinates, the encoding module further comprises a second processing unit, configured to add a second edge of the target triangle to the edge set, and delete the first edge from the edge set, wherein the second edge is an edge of the target triangle that is not comprised in the edge set.

**33.** An encoding device, comprising a processor and a memory, wherein the memory stores a program or instructions capable of running on the processor, and when the program or instructions are executed by the processor, the steps of the encoding method according to any one of claims 1 to 11 are implemented.

**34.** A decoding apparatus, comprising:

a second obtaining module, configured to decode an obtained bitstream of a target three-dimensional mesh to obtain geometry information and a connectivity of the target three-dimensional mesh; and
a decoding module, configured to perform decoding based on the geometry information and the connectivity to obtain texture coordinates of a vertex in the target three-dimensional mesh.

**35.** A decoding device, comprising a processor and a memory, wherein the memory stores a program or instructions capable of running on the processor, and when the program or instructions are executed by the processor, the steps of the decoding method according to any one of claims 12 to 21 are implemented.

36. A readable storage medium, wherein the readable storage medium stores a program or instructions, and when the program or instructions are executed by a processor, the steps of the encoding method according to any one of claims 1 to 11 or the steps of the decoding method according to any one of claims 12 to 21 are implemented.

Start

An encoder reconstructs geometry information and a connectivity of a target three-dimensional mesh based on an encoding result for the geometry information and the connectivity of the target three-dimensional mesh

101

The encoder encodes texture coordinates of a vertex in the target three-dimensional mesh based on reconstructed geometry information and a reconstructed connectivity

102

End

FIG. 1

C

N

X

P

O

FIG. 2

FIG. 3

FIG. 4

FIG. 5

Start

A decoder decodes an obtained bitstream of a target three-dimensional mesh to obtain geometry information and a connectivity of the target three-dimensional mesh ⌐601

The decoder performs decoding based on the geometry information and the connectivity to obtain texture coordinates of a vertex in the target three-dimensional mesh ⌐602

End

FIG. 6

Decode a three-dimensional mesh

Decode geometry information

Bitstream

Bitstream decoding

Decode a connectivity

Decode UV coordinates

FIG. 7

Decoding apparatus — 800

Second obtaining module — 801

Decoding module — 802

**FIG. 8**

— 900

Communication device

901 — Processor ⟺ Memory — 902

**FIG. 9**

## INTERNATIONAL SEARCH REPORT

| International application No. |
|---|
| **PCT/CN2023/086199** |

| A. | CLASSIFICATION OF SUBJECT MATTER |
|---|---|

G06T9/00(2006.01)i

According to International Patent Classification (IPC) or to both national classification and IPC

| B. | FIELDS SEARCHED |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, ENTXT, CNKI, GOOGLE: 编码, 解码, 差分, 三维, 纹理, 预测, 重建, 坐标, 连接, 顶点, 边, encode, decode, differential, three 1w dimensional, predict+, rebuild, coordinate, connect+, vertex, edge

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 104094317 A (THOMSON LICENSING L.L.C.) 08 October 2014 (2014-10-08) description, paragraphs [0032], [0049]-[0058], and [0073]-[0076], claim 13, and figures 2A, 3-4, and 9 | 1, 12, 22, 33-36 |
| A | CN 102625126 A (BEIJING UNIVERSITY OF TECHNOLOGY) 01 August 2012 (2012-08-01) entire document | 1-36 |
| A | CN 104541308 A (INTEL CORP.) 22 April 2015 (2015-04-22) entire document | 1-36 |
| A | US 2020098137 A1 (GOOGLE L.L.C.) 26 March 2020 (2020-03-26) entire document | 1-36 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 June 2023** | **14 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<div style="text-align: center">

**INTERNATIONAL SEARCH REPORT**
**Information on patent family members**

</div>

| International application No. |
| --- |
| **PCT/CN2023/086199** |

| Patent document cited in search report | | | Publication date (day/month/year) | Patent family member(s) | | | Publication date (day/month/year) |
| --- | --- | --- | --- | --- | --- | --- | --- |
| CN | 104094317 | A | 08 October 2014 | None | | | |
| CN | 102625126 | A | 01 August 2012 | None | | | |
| CN | 104541308 | A | 22 April 2015 | WO | 2014052437 | A1 | 03 April 2014 |
| | | | | US | 2014092439 | A1 | 03 April 2014 |
| | | | | DE | 112013004778 | T5 | 16 July 2015 |
| US | 2020098137 | A1 | 26 March 2020 | US | 10783669 | B2 | 22 September 2020 |
| | | | | EP | 3629293 | A1 | 01 April 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210370096
- CN 202210735276

- CN 202210845200